# EUROPEAN PATENT APPLICATION

(11) **EP 4 770 055 A1**
(43) Date of publication of application: **01.07.2026**
(21) Application number: 25222145.2
(22) Date of filing: 10.12.2025
(51) Int. Cl.: H04L 67/12, H04W 4/38, H04W 8/00, H04W 88/16

(54) **SETTING DEVICE, MEASUREMENT SYSTEM, SETTING METHOD AND SETTING PROGRAM**

(30) Priority: 26.12.2024 JP 2024230423
(71) Applicant: Yokogawa Electric Corporation, Musashino-shi, Tokyo 180-8750 (JP)
(72) Inventor: ARITA, Kaito, Musashino-shi, Tokyo, 180-8750 (JP)
(74) Representative: Winter, Brandl - Partnerschaft mbB

(57) **Abstract**

In a measurement system (1), a setting device (10) transmits, to a gateway (20-1, 20-2), a scan instruction that causes the gateway to perform a device scan for acquiring device identification information on a sensor device (30-1, 30-2, 30-3, 30-4) being connected to the gateway (20-1, 20-2) from the sensor device, sets a measurement item of the sensor device based on the device identification information that is received from the gateway, and transmits, to a cloud server (40), item information that is information in which the device identification information and the measurement item are associated with each other and the cloud server registers the item information received from the setting device in the cloud server and transmits the item information to the gateway, and the gateway acquires a measured value of the sensor device from the sensor device based on the item information received from the cloud server.

## Description

### FIELD

The present disclosure relates to a setting device, a measurement system, a setting method, and a setting program.

### BACKGROUND

Measurement items of a sensor device, such as a wattmeter or a thermometer, are set manually.

An example of related-art is described in Japanese National Publication of International Patent Application No. 2020-517198.

A long time is required for a setting operation because measurement items of a sensor device are set manually.

The disclosure proposes a technique that enables a reduction of a time required to set a measurement item of a sensor device.

### SUMMARY

According to an aspect of an embodiment, a setting device includes a processor. The processor executes transmitting, to a gateway, a scan instruction that causes the gateway to perform a device scan for acquiring device identification information on a sensor device being connected to the gateway from the sensor device. The processor executes setting a measurement item of the sensor device based on the device identification information that is received from the gateway. The processor executes transmitting, to a server, item information that is information in which the device identification information and the measurement item are associated with each other.

### BRIEF DESCRIPTION OF THE DRAWINGS

FIG. 1 is a diagram illustrating an example of a configuration of a measurement system of the present disclosure;
FIG. 2 is a diagram illustrating an example of a configuration of a setting device of the disclosure;
FIG. 3 is a diagram illustrating an example of recommendation setting information of the disclosure;
FIG. 4A is a diagram illustrating an example of a procedure taken by the measurement system of the disclosure;
FIG. 4B is a diagram illustrating an example of a procedure taken by the measurement system of the disclosure;
FIG. 4C is a diagram illustrating an example of a procedure taken by the measurement system of the disclosure;
FIG. 5 is a diagram illustrating an example of first connected device information of the disclosure;
FIG. 6 is a diagram illustrating an example of measurement item information of the disclosure;
FIG. 7 is a diagram illustrating an example of second connected device information of the disclosure;
FIG. 8 is a diagram illustrating an example of first post-update information of the disclosure;
FIG. 9 is a diagram illustrating an example of third connected device information of the disclosure; and
FIG. 10 is a diagram illustrating an example of second post-update information of the disclosure.

### DESCRIPTION OF EMBODIMENTS

An embodiment of the present disclosure will be described below with reference to the accompanying drawings.

In the following embodiment, the same parts or the same processes are denoted with the same reference numeral and thus redundant description thereof is sometimes omitted.

A wattmeter and a thermometer are taken as examples of a sensor device and are described below. Note that the disclosed technique is applicable to sensor devices other than wattmeters and thermometers.

### Configuration of Measurement System

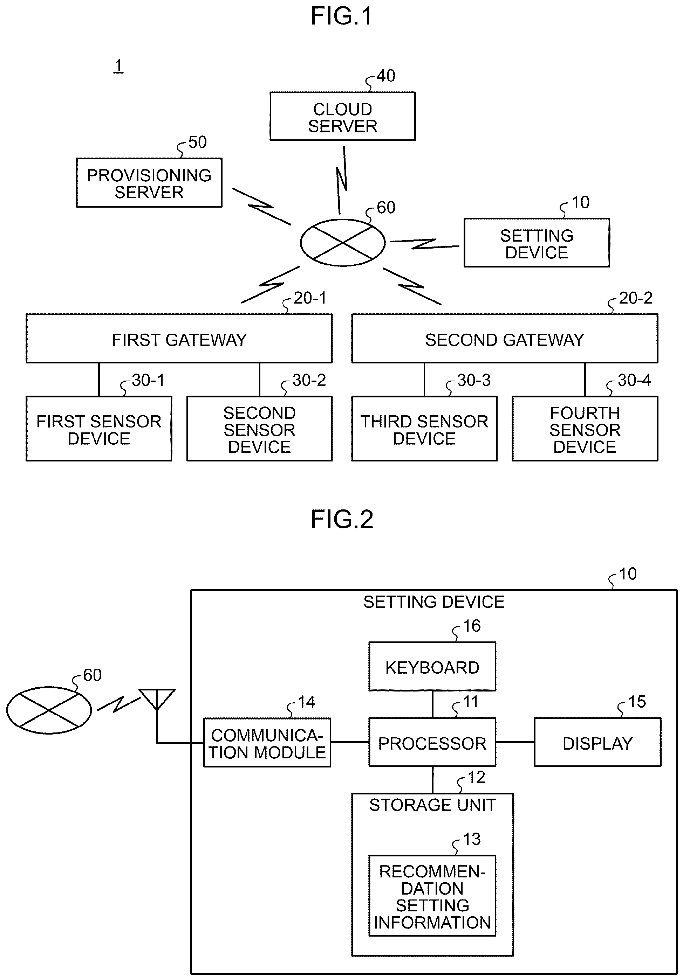

FIG. 1 is a diagram illustrating an example of a configuration of a measurement system of the disclosure. A measurement system 1 in FIG. 1 includes a setting device 10, a first gateway 20-1, a second gateway 20-2, a first sensor device 30-1, a second sensor device 30-2, a third sensor device 30-3, a fourth sensor device 30-4, a cloud server 40, and a provisioning server 50. The setting device 10 is connected to each of the first gateway 20-1, the second gateway 20-2, the cloud server 40, and the provisioning server 50 via a network 60. The first gateway 20-1 is connected to the first sensor device 30-1 and the second sensor device 30-2 and the second gateway 20-2 is connected to the third sensor device 30-3 and the fourth sensor device 30-4. The first gateway 20-1 and the second gateway 20-2 are sometimes collectively referred to as "gateway 20" below. The first sensor device 30-1, the second sensor device 30-2, the third sensor device 30-3, and the fourth sensor device 30-4 are sometimes collectively referred to as "sensor device 30".

A LTE (Long Term Evolution) network is taken as an example of the network 60. RS 485 is taken as an example of a protocol that is used for communication between the gateway 20 and the sensor device 30. A personal computer is taken as an example of the setting device 10.

Each of the setting device 10, the gateway 20, the cloud server 40, and the provisioning server 50 is connected to the network 60 in a wireless or wired manner.

### Configuration of Setting Device

FIG. 2 is a diagram illustrating an example of a configuration of a setting device of the disclosure. The setting device 10 in FIG. 2 includes a processor 11, a storage unit 12, a communication module 14, a display 15, and a keyboard 16. The communication module 14 is connected to the network 60 and the processor 11 is able to communicate with each of the gateway 20, the cloud server 40, and the provisioning server 50 using the communication module 14 via the network 60. A CPU (Central Processing Unit) is taken as an example of the processor 11. A storage or a memory is taken as an example of the storage unit 12.

The storage unit 12 stores recommendation setting information 13 that is information in which measurement items that are recommended (sometimes "recommended measurement items" below) among a plurality of measurement items measurable by the sensor device 30 (sometimes referred to as "measurable items" below) are set in association with the name of the sensor device 30 (sometimes referred to as "device name" below).

### Recommendation Setting Information

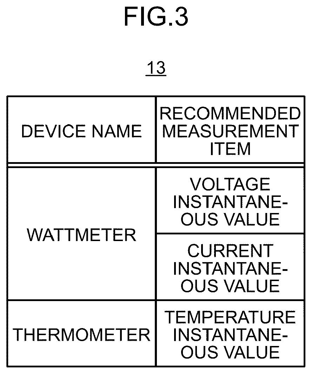

FIG. 3 is a diagram illustrating an example of recommendation setting information of the disclosure. As illustrated in FIG. 13, in the recommendation setting information 13, device names and recommended measurement items are set in association with each other. For example, a plurality of measurement items that are measurable by a wattmeter includes voltage instantaneous value, voltage maximum value, voltage minimum value, current instantaneous value, current maximum value, current minimum value, power instantaneous value, and accumulated power value. For example, a plurality of measurement items that are measurable by a thermometer includes temperature instantaneous value, a temperature average value, a temperature maximum value, and a temperature minimum value. A user of the setting device 10 generates the recommendation setting information 13 by selecting any recommended measurement items that the user recommends from these measurable items for each sensor device 30. For example, as illustrated in FIG. 3, the recommendation setting information 13 in the case where voltage instantaneous value and current instantaneous value are selected as recommended measurement items for wattmeters and temperature instantaneous value is selected as a recommended measurement item for thermometers is generated by the user and is stored in the storage unit 12.

AI (Artificial Intelligence) may generate the recommendation setting information 13. For example, the recommendation setting information 13 may be generated using AI to which a type of the sensor device 30 is input and that outputs recommended measurement items based on the type of the sensor device and content of an operation that the user demands.

### Procedure taken by Measurement System

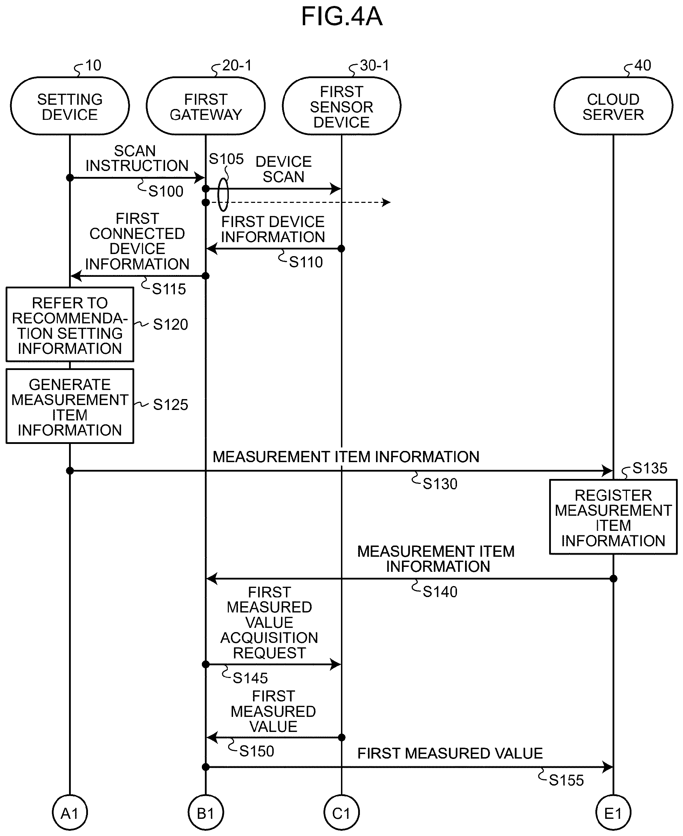

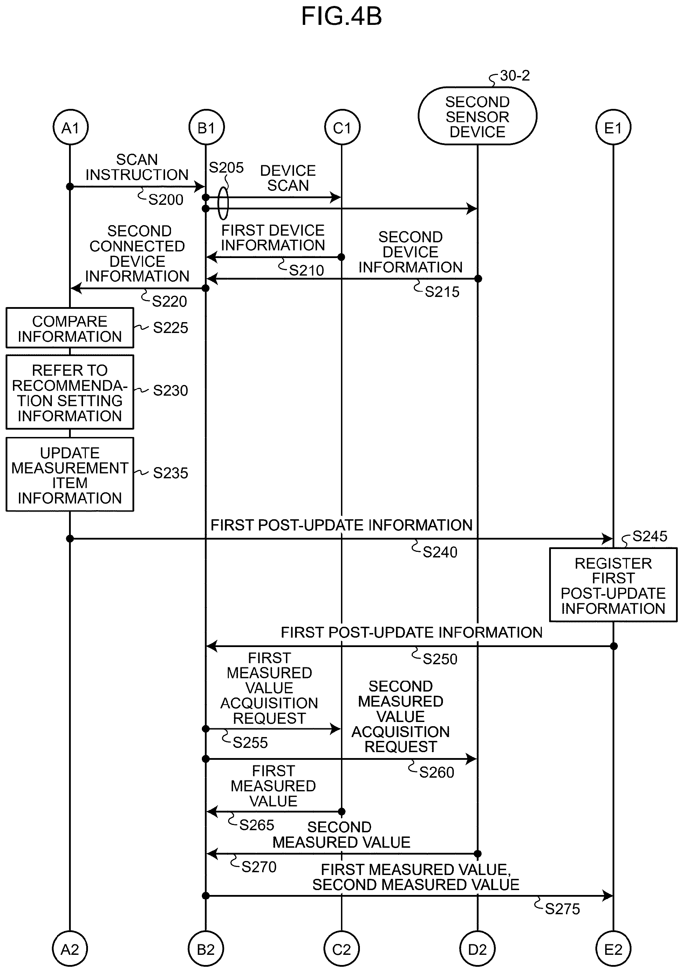

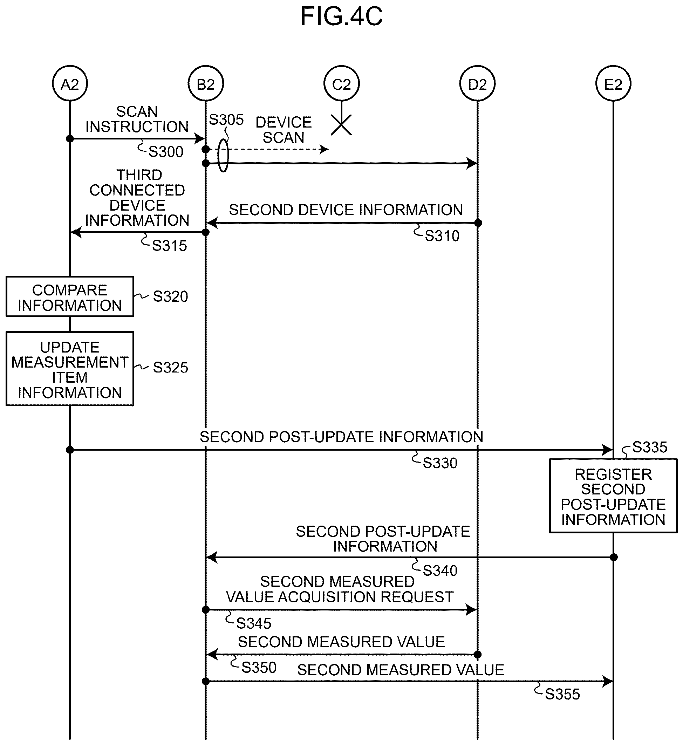

FIGS. 4A, 4B and 4C are diagrams illustrating an example of a procedure taken by the measurement system of the disclosure.

The case where the setting device 10 selects the first gateway 20-1 from the first gateway 20-1 and the second gateway 20-2 will be taken as an example and described below. Each of the first gateway 20-1 and the second gateway 20-2 has a unique IP address and the setting device 10 specifies the IP address of the first gateway 20-1, thereby selecting the first gateway 20-1 from the first gateway 20-1 and the second gateway 20-2.

The case where the first sensor device 30-1 is a wattmeter and the second sensor device 30-2 is a thermometer will be taken as an example and described below.

The case where, while the first sensor device 30-1 is connected to the first gateway 20-1 at the time of execution of the process of step S 100, the second sensor device 30-2 is not connected, both the first sensor device 30-1 and the second sensor device 30-2 are connected to the first gateway 20-1 at the time of execution of the process of step S200, and, while the first sensor device 30-1 is not connected to the first gateway 20-1 at the time of execution of the process of step S300, the second sensor device 30-2 is connected will be taken as an example and described below.

Before the process of step S100 is started, the gateway 20 acquires URL (Uniform Resource Locator) information on the cloud server 40 from the provisioning server 50. For example, the gateway 20 acquires the URL information from the provisioning server 50 at the time of initial power activation on the gateway 20 or at the time of resetting the gateway 20.

At step S100 in FIG. 4A, the processor 11 transmits a scan instruction to the first gateway 20-1. The scam instruction from the processor 11 to the first gateway 20-1 is regularly transmitted in given cycles. Note that the processor 11 may transmit the scan instruction to the first gateway 20-1 via the cloud server 40.

Next, at step S105, the first gateway 20-1 performs a device scan on the sensor device 30 in order to obtain a device ID and a device name of the sensor device 30 being connected to the first gateway 20-1 (sometimes referred to as "connected device" below) from the connected device and thus identify the connected device. The device ID and the device name are an example of device identification information. For example, only one of the device ID and the device name or both the device ID and the device name are usable as the device identification information.

At the time of execution of the process of step S105, while the first sensor device 30-1 is connected to the first gateway 20-1, the second sensor device 30-2 is not connected and thus, in response to the device scan at step S105, information containing the device ID and the device name of the first sensor device 30-1 (sometimes referred to as "first device information" below) is transmitted from the first sensor device 30-1 to the first gateway 20-1 at step S110.

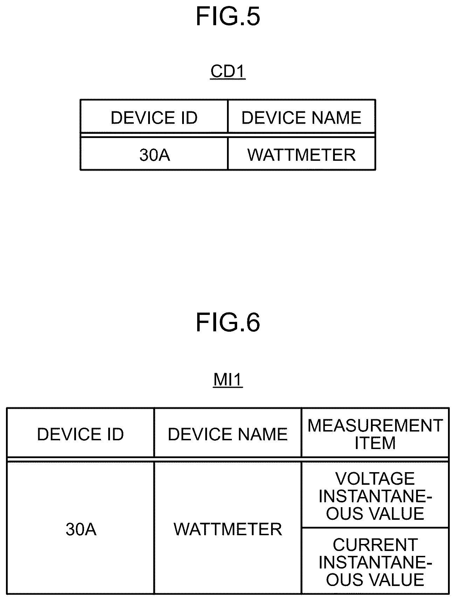

Subsequently, at step S115, the first gateway 20-1 transmits information containing a device ID and a device name of a connected device (sometimes referred to as "connected device information") to the setting device 10. As illustrated in FIG. 5, while "30A" that is the device ID of the first sensor device 30-1 and "wattmeter" that is the device name of the first sensor device 30-1 are contained in first connected device information CD1 that is the connected device information transmitted from the first gateway 20-1 to the setting device 10 at step S115, a device ID and a device name of the second sensor device 30-2 are not contained. FIG. 5 is a diagram illustrating an example of the first connected device information of the disclosure.

At step S120, the processor 11 that receives the first connected device information CD1 at step S115 refers to the recommendation setting information 13 based on the first connected device information CD1 and acquires the recommended measurement items from the recommendation setting information 13. At step S120, the processor 11 refers to the recommendation setting information 13 (FIG. 3) based on "wattmeter" that is the device name contained in the first connected device information CD1 and acquires "voltage instantaneous value" and "current instantaneous value" that are the recommended measurement items corresponding to "wattmeter" in the recommendation setting information 13 from the recommendation setting information 13.

At step S125, the processor 11 generates information in which the device ID and the device name of the connected device and the measurement items of the connected device are associated with each other (sometimes referred to as "measurement item information" below) by adding the recommended measurement items acquired at step S120 to the first connected device information CD1 received at step S115. As illustrated in FIG. 6, "30A" that is de device ID of the first sensor device 30-1 and "wattmeter" that is the device name of the first sensor device 30-1 are contained in measurement item information MI1 that is generated at step S125. In the measurement item information MI1 illustrated in FIG. 6, "voltage instantaneous value" and "current instantaneous value" that are recommended measurement items for wattmeters are contained as the measurement items of the first sensor device 30-1. FIG. 6 is a diagram illustrating an example of the measurement item information of the disclosure. In this manner, the processor 11 sets the setting items of the sensor device 30. The processor 11 causes the storage unit 12 to store the generated measurement item information.

At step S130, the processor 11 transmits the measurement item information MI1 that is generated at step S125 to the cloud server 40.

Subsequently, at step S135, the cloud server 40 registers the measurement item information MI1 in the cloud server 40.

Subsequently, at step S140, the cloud server 40 transmits the measurement item information MI1 to the first gateway 20-1.

Subsequently, at step S145, the first gateway 20-1 transmits a request to acquire a measured value of the first sensor device 30-1 (sometimes referred to as "first measured value acquisition request") to the first sensor device 30-1 according to the measurement item information MI1. "Voltage instantaneous value" and "current instantaneous value" are contained in the measurement item information MI1 as the measurement items of the first sensor device 30-1 whose device ID is "30A" and therefore the first measured value acquisition request containing "voltage instantaneous value" and "current instantaneous value" is transmitted from the first gateway 20-1 to the first sensor device 30-1 whose device ID is "30A".

At step S150, the first sensor device 30-1 transmits a voltage instantaneous value and a current instantaneous value as first measured values to the first gateway 20-1 in response to the first measured value acquisition request that is received at step S145. In this manner, the first gateway 20-1 acquires the first measured values.

Subsequently, at step S155, the first gateway 20-1 transmits the first measured values received at step S150 to the cloud server 40.

The case where the second sensor device 30-2 is newly connected to the first gateway 20-1 at any time between step S115 and step S155 is assumed here.

At step S200 in FIG. 4B, the processor 11 transmits a scan instruction to the first gateway 20-1.

Subsequently, at step S205, the first gateway 20-1 performs a device scan on the sensor device 30 in order to determine a connected device and acquire the device ID and the device name of the connected device from the connected device.

At the time of execution of the process of step S205, both the first sensor device 30-1 and the second sensor device 30-2 are connected to the first gateway 20-1. Thus, in response to the device scan at step S205, the first device information is transmitted from the first sensor device 30-1 to the first gateway 20-1 at step S210 and information containing the device ID and the device name of the second sensor device 30-2 (sometimes referred to as "second device information" below) is transmitted from the second sensor device 30-2 to the first gateway 20-1 at step S215.

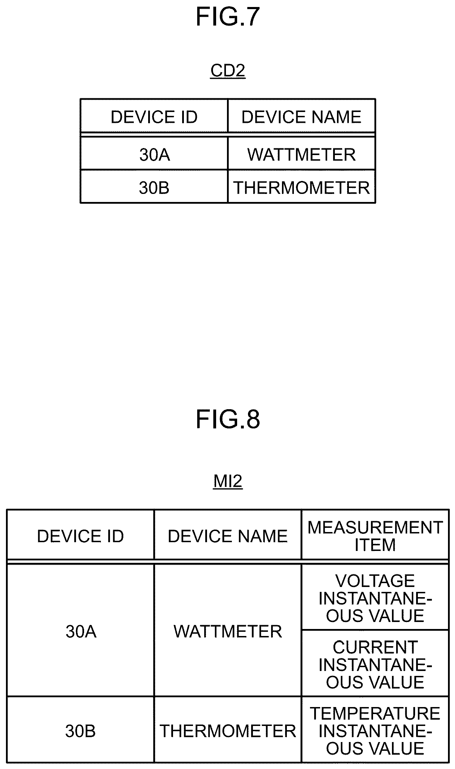

Subsequently, the first gateway 20-1 transmits connected device information to the setting device 10. As illustrated in FIG. 7, "30A" that is the device ID of the first sensor device 30-1, "wattmeter" that is the device name of the first sensor device 30-1, "30B" that is the device ID of the second sensor device 30-2, and "thermometer" that is the device name of the second sensor device 30-2 are contained in second connected device information CD2 that is the connected device information transmitted from the first gateway 20-1 to the setting device 10 at step S220. FIG. 7 is a diagram illustrating an example of second connected device information of the disclosure.

Subsequently, at step S225, the processor 11 compares the measurement item information MI1 (FIG. 6) that the storage unit 12 is caused to store at step S125 and the second connected device information CD2 (FIG. 7) that is received at step S220. As a result of the comparison, the processor 11 determines that "thermometer" that is the device name not contained in the measurement item information MI1 is contained in the second connected device information CD2. Alternatively, the processor 11 determines that "30B" that is the device ID not contained in the measurement item information MI1 is contained in the second connected device information CD2.

At step S230, the processor 11 thus refers to the recommendation setting information 13 (FIG. 3) based on "thermometer" that is the device name contained in the second connected device information CD2 and, on the other hand, not contained in the measurement item information MI1 and acquires "temperature instantaneous value" that is a recommended measurement item corresponding to "thermometer" in the recommendation setting information 13 from the recommendation setting information 13. Note that, at step S230, the processor 11 may refer to the recommendation setting information 13 (FIG. 3) based on "thermometer" that is associated with "30B" that is the device ID contained in the second connected device information CD2 and, on the other hand, not contained in the measurement item information MI1 and acquire "temperature instantaneous value" that is a recommended measurement item corresponding to "thermometer" in the recommendation setting information 13 from the recommendation setting information 13.

Subsequently, at step S235, the processor 11 adds, to the measurement item information MI1, the device ID "30B" and the device name "thermometer" contained in the second connected device information CD2 that is received at step S220 and the recommended measurement item "temperature instantaneous value" acquired at step S230 to the measurement item information MI1, thereby updating the measurement item information. An example of the measurement item information after the update at step S235 (sometimes referred to as "first post-update information" below) is illustrated in FIG. 8. As illustrated in FIG. 8, "30A" that is the device ID of the first sensor device 30-1 and "wattmeter" that is the device name of the first sensor device 30-1 are contained in first post-update information MI2 that is generated at step S235. "Voltage instantaneous value" and "current instantaneous value" that are recommended measurement items for wattmeters are contained in the first post-update information MI2 illustrated in FIG. 8 as the measurement items of the first sensor device 30-1. "30B" that is the device ID of the second sensor device 30-2 and "thermometer" that is the device name of the second sensor device 30-2 are contained in first post-update information MI2 illustrated in FIG. 8. "Temperature instantaneous value" that is recommended measurement item for thermometers are contained in the first post-update information MI2 illustrated in FIG. 8 as the measurement items of the second sensor device 30-2. FIG. 8 is a diagram illustrating an example of the first post-update information of the disclosure. When the sensor device 30 that is newly connected to the gateway 20 appears, the processor 11 adds measurement items of the sensor device 30 that is newly connected to the gateway 20 as described above, thereby updating the measurement items of the sensor device 30. The processor 11 causes the storage unit 12 to store the generated first post-update information MI2.

Subsequently, at step S240, the processor 11 transmits the first post-update information MI2 that is generated at step S235 to the cloud server 40.

Subsequently, at step S245, the cloud server 40 registers the first post-update information MI2 in the cloud server 40.

Subsequently, at step S250, the cloud server 40 transmits the first post-update information MI2 to the first gateway 20-1.

Subsequently, at step S255, the first gateway 20-1 transmits a first measured value acquisition request to the first sensor device 30-1 according to the first post-update information MI2. "Voltage instantaneous value" and "current instantaneous value" are contained in the first post-update information MI2 as measurement items of the first sensor device 30-1 whose device ID is "30A" and thus the first measured value acquisition request containing "voltage instantaneous value" and "current instantaneous value" is transmitted from the first gateway 20-1 to the first sensor device 30-1 whose device ID is "30A".

Subsequently, at step S260, the first gateway 20-1 transmits a request to acquire a measured value of the second sensor device 30-2 (sometimes referred to as "second measured value acquisition request") to the second sensor device 30-2 according to the first post-update information MI2. "Temperature instantaneous value" is contained in the first post-update information MI2 as the measurement item of the second sensor device 30-2 whose device ID is "30B" and therefore the second measured value acquisition request containing "temperature instantaneous value" is transmitted from the first gateway 20-1 to the second sensor device 30-2 whose device ID is "30B".

At step S265, the first sensor device 30-1 transmits a voltage instantaneous value and a current instantaneous value as first measured values to the first gateway 20-1 in response to the first measured value acquisition request that is received at step S255. In this manner, the first gateway 20-1 acquires the first measured values.

Subsequently, at step S270, the first gateway 20-1 transmits a temperature instantaneous value as a second measured value to the first gateway 20-1 in response to the second measured value acquisition request that is received at step S260. In this manner, the first gateway 20-1 acquires the second measured value.

Subsequently, at step S275, the first gateway 20-1 transmits the first measured values received at step S265 and the second measured value received at step S270 to the cloud server 40.

The case where the first sensor device 30-1 is disconnected from the first gateway 20-1 at any time between step S220 and step S275 is assumed here.

At step S300 in FIG. 4C, the processor 11 transmits a scan instruction to the first gateway 20-1.

Subsequently, at step S305, the first gateway 20-1 performs a device scan on the sensor device 30 in order to determine a connected device and acquire a device ID and a device name of the connected device from the connected device.

At the time of execution of the process of step S305, while the second sensor device 30-2 is connected to the first gateway 20-1, the first sensor device 30-1 is not connected and thus, in response to the device scan at step S305, second device information is transmitted from the second sensor device 30-2 to the first gateway 20-1 at step S310.

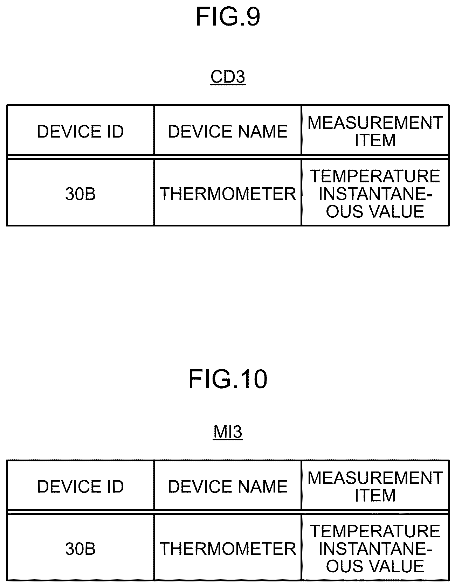

Subsequently, at step S315, the first gateway 20-1 transmits connected device information to the setting device 10. As illustrated in FIG. 9, while "30B" that is the device ID of the second sensor device 30-2 and "thermometer" that is the device name of the second sensor device 30-2 are contained in third connected device information CD3 that is the connected device information transmitted from the first gateway 20-1 to the setting device 10 at step S315, the device ID and the device name of the first sensor device 30-1 are not contained. FIG. 9 is a diagram illustrating an example of the third connected device information of the disclosure.

Subsequently, at step S320, the processor 11 compares the first pot-update information MI2 (FIG. 8) that the storage unit 12 is caused to store at step S235 and the third connected device information CD3 (FIG. 9) that is received at step S315. As a result of the comparison, the processor 11 determines that "30A" that is the device ID contained in the first pot-update information MI2 is not contained in the third connected device information CD3.

At step S325, the processor 11 thus deletes the item corresponding to "30A" that is the device ID contained in the first post-update information MI2 and not contained in the third connected device information CD3 on the other hand, thereby updating the measurement item information. An example of the measurement item information after the update at step S325 (sometimes referred to as "second post-update information" below) is illustrated in FIG. 10. As illustrated in FIG. 10, "30B" that is the device ID of the second sensor device 30-2 and "thermometer" that is the device name of the second sensor device 30-2 are contained in second post-update information MI3 that is generated at step S325. "Temperature instantaneous value" that is a recommended measurement item for thermometers is contained in the second post-update information MI3 illustrated in FIG. 10 as the measurement item of the second sensor device 30-2. FIG. 10 is a diagram illustrating an example of the second post-update information of the disclosure. When the sensor device 30 that is disconnected from the gateway 20 appears, the processor 11 deletes a measurement item of the sensor device 30 that is disconnected from the gateway 20 as described above, thereby updating the measurement items of the sensor device 30. The processor 11 causes the storage unit 12 to store the generated second post-update information MI2.

Subsequently, at step S330, the processor 11 transmits the second post-update information MI3 that is generated at step S235 to the cloud server 40.

Subsequently, at step S335, the cloud server 40 registers the second post-update information MI3 in the cloud server 40.

Subsequently, at step S340, the cloud server 40 transmits the second post-update information MI3 to the first gateway 20-1.

Subsequently, at step S345, the first gateway 20-1 transmits a second measured value acquisition request to the second sensor device 30-2 according to the second post-update information MI3. "Temperature instantaneous value" is contained in the second post-update information MI3 as measurement items of the second sensor device 30-2 whose device ID is "30B" and thus the second measured value acquisition request containing "temperature instantaneous value" is transmitted from the first gateway 20-1 to the second sensor device 30-2 whose device ID is "30B".

Subsequently, at step S350, the second sensor device 30-2 transmits a temperature instantaneous value as a second measured value to the first gateway 20-1 in response to the second measured value acquisition request that is received at step S345. In this manner, the first gateway 20-1 acquires the second measured value.

Subsequently, at step S355, the first gateway 20-1 transmits the second measured value received at step S350 to the cloud server 40.

In the description above, the case where a measurement item of the sensor device 30 is set based on both the device ID and the device name is taken as an example. A measurement item of the sensor device 30 however may be set not based on the device ID but based on the device name. When a measurement item of the sensor device 30 is set not based on the device ID but based on the device name, a device scan on the sensor device 30 is performed in order to acquire the device name of a connected device from the connected device and the measurement item information is information in which the device name of the connected device and the measurement item of the connected device are associated with each other.

A measurement item of the sensor device 30 may be set not based on the device name but based on the device ID. When a measurement item of the sensor device 30 is set not based on the device name but based on the device ID, a device scan on the sensor device 30 is performed in order to acquire the device ID of a connected device from the connected device and the measurement item information is information in which the device ID of the connected device and the measurement item of the connected device are associated with each other.

When the recommended measurement item is updated in the recommendation setting information 13, the processor 11 may determine that the sensor device 30 having the device name corresponding to the updated recommended measurement item is the sensor device 30 that is newly connected to the gateway 20. The case where the recommended measurement item corresponding to thermometers is updated from "temperature instantaneous value" to "temperature average", or the like, is taken as an example of the case where the recommended measurement item is updated.

The embodiments have been described.

All or part of each of the processes in the setting device 10 in the description above may be implemented by causing the processor 11 to execute programs corresponding to the respective processes. For example, the programs corresponding to the respective processes in the description above may be stored in the storage unit 12 and the programs may be read by the processor 11 from the storage unit 12 and executed. The programs may be stored in a program server that is connected to the setting device 10 via the network 60, downloaded into the setting device 10 from the program server, and executed or the programs may be stored in a recording medium readable by the setting device 10, read from the recording medium, and executed. For example, portable recording media, such as a memory card, a USB memory, a SD card, a flexible disk, a magnetooptical disk, a CD-ROM, and a DVD, are included in the recording medium readable by the setting device 10.

As described above, the setting device of the disclosure (the setting device 10 of the embodiment) includes a processor (the processor 11 in the embodiment). The processor transmits a scan instruction that causes a gateway to perform a device scan for acquiring device identification information on a connected sensor device (the sensor device 30 of the embodiment) from the sensor device to the gateway. The processor sets a measurement item of the sensor device based on the device identification information that is received from the gateway. The processor transmits item information that is information in which the device identification information and the measurement item are associated with each other to a server (the cloud server 40 of the embodiment).

Only transmitting the scan instruction from the processor to the gateway automatically generates the item information as described above and thus it is possible to delete a time required to set a measurement item of the sensor device.

According to the disclosure, it is possible to reduce a time required to set a measurement item of a sensor device.

## Claims

1. A setting device (10) comprising a processor (11) that executes:
transmitting, to a gateway (20), a scan instruction that causes the gateway (20) to perform a device scan for acquiring device identification information on a sensor device (30) being connected to the gateway (20) from the sensor device (30),
setting a measurement item of the sensor device (30) based on the device identification information that is received from the gateway (20), and
transmitting, to a server (40), item information that is information in which the device identification information and the measurement item are associated with each other.

2. The setting device (10) according to claim 1, wherein the processor (11) sets, as the measurement item, a recommended measurement item that is a measurement item recommended among a plurality of measurement items measurable by the sensor device (30).

3. The setting device (10) according to claim 2, wherein the processor (11) refers to recommendation setting information that is information in which the recommended measurement item is set in association with the device identification information and thus, based on the device identification information, sets the recommended measurement item as the measurement item.

4. The setting device (10) according to claim 3, further comprising a storage unit (12) that stores the recommendation setting information.

5. The setting device (10) according to anyone of claims 1 to 4, wherein the processor (11), by specifying an IP address of the gateway (20), selects the gateway (20) that is caused to perform the device scan from among a plurality of the gateways (20) having unique IP addresses respectively.

6. The setting device (10) according to anyone of claims 1 to 5, wherein the processor (11)
compares the device identification information and the item information and determines that a sensor device (30) having the device identification information not contained in the item information is a sensor device (30) that is newly connected to the gateway (20) and
adds the measurement item of the sensor device (30) that is newly connected to the item information when the sensor device (30) that is newly connected appears.

7. The setting device (10) according to anyone of claims 1 to 6, wherein the processor (11) compares the device identification information and the item information and does not set the measurement item in a sensor device (30) having the device identification information contained in the item information.

8. The setting device (10) according to anyone of claims 1 to 7, wherein, when a sensor device (30) that is disconnected from the gateway (20) appears, the processor (11) deletes a measurement item of the disconnected sensor device (30) from the item information.

9. A measurement system comprising a setting device (10), a gateway (20), and a server (40),
wherein the setting device (10) executes:
transmitting, to the gateway (20), a scan instruction that causes the gateway (20) to perform a device scan for acquiring device identification information on a sensor device (30) being connected to the gateway (20) from the sensor device (30),
setting a measurement item of the sensor device (30) based on the device identification information that is received from the gateway (20), and
transmitting, to the server (40), item information that is information in which the device identification information and the measurement item are associated with each other,
the server (40) executes:
registering the item information received from the setting device (10) in the server (40), and
transmitting the item information received from the setting device (10) to the gateway (20), and
the gateway (20) acquires a measured value of the sensor device (30) from the sensor device (30) based on the item information received from the server (40).

10. A setting method comprising:
by a setting device, transmitting, to a gateway, a scan instruction that causes the gateway to perform a device scan for acquiring device identification information on a sensor device being connected to the gateway from the sensor device,
by the setting device, setting a measurement item of the sensor device based on the device identification information that is received from the gateway, and
by the setting device, transmitting, to a server, item information that is information in which the device identification information and the measurement item are associated with each other.

11. A setting program that causes a processor to execute a process comprising:
transmitting, to a gateway, a scan instruction that causes the gateway to perform a device scan for acquiring device identification information on a sensor device being connected to the gateway from the sensor device,
setting a measurement item of the sensor device based on the device identification information that is received from the gateway, and
transmitting, to a server, item information that is information in which the device identification information and the measurement item are associated with each other.
